**Europäisches Patentamt**

**European Patent Office**

**Office européen des brevets**

(11) Veröffentlichungsnummer: **0 343 478**

**A1**

## (12) EUROPÄISCHE PATENTANMELDUNG

(21) Anmeldenummer: **89108704.1**

(22) Anmeldetag: **16.05.89**

(51) Int. Cl.⁴: **G01N 27/50 , G01N 27/58**

(30) Priorität: **24.05.88 DE 3817518**

(43) Veröffentlichungstag der Anmeldung:
**29.11.89 Patentblatt 89/48**

(84) Benannte Vertragsstaaten:
**DE ES FR GB IT**

(71) Anmelder: **PIERBURG GMBH**
**Leuschstrasse 1**
**D-4040 Neuss 1(DE)**

(72) Erfinder: **Henning, Manfred**
**Lange Hecke 12**
**D-4044 Kaarst(DE)**
Erfinder: **Gommers, Hans-Georg**
**Borner Mühle 13**
**D-4057 Brüggen/Born(DE)**
Erfinder: **Dickers, Guido**
**Bleichgrabenstrasse 22**
**D-4050 Mönchengladbach 1(DE)**

(74) Vertreter: **Schumacher, Bernd, Dipl.-Ing.**
**Am Schwaberg 13**
**D-6450 Hanau 6(DE)**

(54) Verfahren und Einrichtung zum Feststellen der Betriebsbereitschaft einer Lambda-Messsonde.

(57) Um eine von der gemischabhängigen Eigenspannung ($U_{so}$ einer Lambda-Meßsonde (10) unabhängige Feststellung der Betriebsbereitschaft derselben durchzuführen, wird ein näherungsweise konstanter Abfragewechselstrom ($I_w$), der beispielsweise impulsförmig ist, in die Meßsonde (10) eingespeist. Der dabei am Innenwiderstand ($R_i$) derselben abfallende Wechselspannungsanteil wird ausgefiltert und als Maß für die Betriebsbereitschaft der Meßsonde (10) ausgewertet. Die Frequenz des Abfragewechselstroms ($I_w$) sollte groß gegenüber derjenigen der Eigenspannung ($U_{so}$) der Meßsonde (10) im Regelbetrieb sein. Außerdem sollte der durch den Abfragewechselstrom ($I_w$) am Innenwiderstand ($R_i$) begründete Wechselspannungsanteil klein gegenüber der Eigenspannung ($U_{so}$) der Meßsonde sein. Besonders günstige Verhältnisse ergeben sich dann, wenn die Auswertung des Wechselspannungsabfalls ($U_w$) in Abhängigkeit von der Frequenz und Phasenlage des Abfragewechselstroms ($I_w$) durchgeführt wird.

Das Auswerteglied (20) erzeugt eine erste den Gemischzustand repräsentierende Ausgangsspannung ($U_{AG}$), und eine zweite, die Betriebsbereitschaft bzw. -temperatur anzeigende Ausgangsspannung ($U_{AB}$).

## Verfahren und Einrichtung zum Feststellen der Betriebsbereitschaft einer Lambda-Meßsonde

Die Erfindung betrifft ein Verfahren und eine Einrichtung zum Feststellen der Betriebsbereitschaft einer Lambda-Meßsonde über deren elektrischen Innenwiderstand durch externe elektrische Beaufschlagung und durch Auswerten der dabei an der Meßsonde abfallenden Spannung.

In bekannter Weise ist eine Lambda-Meßsonde erst ab einer Betriebstemperatur von etwa 200 bis 300°C betriebsbereit, wobei der Innenwiderstand einen Widerstandswert von etwa 100 Kilo-Ohm unterschreitet. Ein zu großer Innenwiderstand repräsentiert demnach den Kaltzustand bzw. Außerbetriebszustand der Lambda-Meßsonde. Die Eigenspannung derselben ist abhängig vom Gemischzustand und beträgt bei einem Lambda-Wert von 1 etwa 400 Milli-Volt. Zu kleineren bzw. größeren Lambda-Werten nimmt die Eigenspannung sehr steil zu bzw. ab. Bei sehr kleinen Lambda-Werten steigt die Eigenspannung bis auf etwa 800 Milli-Volt.

Der vorliegenden Erfindung liegt die Aufgabe zugrunde, ein Verfahren und eine Einrichtung der im Oberbegriff genannten Art mit einfachen Maßnahmen so auszubilden, daß eine zuverlässige Feststellung der Betriebsbereitschaft der Lambda-Meßsonde ohne maßgebliche Beeinflussung ihres gemischabhängigen Ausgangssignals möglich ist.

Zur Lösung der gestellten Aufgabe zeichnet sich ein Verfahren der im Oberbegriff von Anspruch 1 genannten Art erfindungsgemäß durch die im Kennzeichen dieses Anspruchs aufgeführten Merkmale aus. Durch diese Maßnahme kann eine von der Überwachung des Gemischzustandes getrennte Feststellung des Innenwiderstands bzw. der Be triebsbereitschaft der Lambda-Meßsonde erfolgen, da der zum Abfragewechselstrom gehörige Wechselspannungsabfall am Innenwiderstand mit genügender Genauigkeit ausgefiltert bzw. separiert werden kann.

Die Weiterbildung von Anspruch 2 ermöglicht eine noch bessere Trennung zwischen dem gemischabhängigen Sondensignal und dem durch den Abfragewechselstrom begründeten Spannungsabfall am Innenwiderstand, wobei wegen der vergleichsweise hohen Frequenz des Abfragewechselstroms einfache Maßnahmen zur Signaltrennung eingesetzt werden können.

Auch die Weiterbildung von Anspruch 3 hat zur Folge, daß das gemischabhängige Sondensignal praktisch nicht von der Überprüfung des Innenwiderstands abhängt. Auch führt der sehr kleine Abfragewechselstrom nicht zu spürbaren thermischen Beeinflussungen der Meßsonde.

Die Weiterbildung von Anspruch 4, insbesondere auch in Verbindung mit der Weiterbildung von Anspruch 5, hat sich als besonders zweckmäßig erwiesen, da die Erzeugung des Abfragewechselstroms und die Auswertung des Meßergebnisses gerätetechnisch einfach zu realisieren sind.

Die Weiterbildung von Anspruch 6 berücksichtigt die Tatsache, daß an die Meßsonde normalerweise ein Kondensator zur Störungsausfilterung angeschlossen ist. Dieser bildet bei extrem hochohmiger Meßsonde mit einem in Reihe zu dem Kondensator liegenden Ankopplungswiderstand einen Tiefpaß mit niedriger Grenzfrequenz. Dadurch wird der auswertbare Wechselspannungsanteil sehr klein, so daß in diesem Grenzfall der vorhandene Anteil des Gleichspannungsabfalls ersatzweise ausgewertet werden kann. Sobald der Gleichspannungsan teil eine bestimmte Schwelle überschreitet, wird hierdurch die Außerbetriebsbereitschaft der Meßsonde angezeigt.

Die Weiterbildung von Anspruch 7 ist besonders vorteilhaft, weil durch die Berücksichtigung von Frequenz und Phasenlage eine nahezu fehlerfreie exakte Meßauswertung durchgeführt werden kann. Das gilt auch dann, wenn sich die Frequenz des Abfragewechselstroms nicht wesentlich von den zeitlichen Veränderungen des Sondensignals im Regelbetrieb der Meßsonde unterscheidet.

Zur Lösung der gestellten Aufgabe zeichnet sich ferner eine zum Durchführen des geschilderten Verfahrens dienende Einrichtung erfindungsgemäß durch die im Kennzeichen von Anspruch 8 aufgeführten Merkmale aus. Hierdurch ist es in einfacher Weise möglich, der Meßsonde einen näherungsweise konstanten Abfragewechselstrom einzuspeisen und somit aus dem Wechselspannungsabfall an der Meßsonde direkt auf den Innenwiderstand derselben zu schließen.

Die Weiterbildung von Anspruch 9 ist gerätetechnisch besonders einfach und preiswert.

Mit der Weiterbildung von Anspruch 10 lassen sich im praktischen Betrieb auf einfache Weise und auch in Grenzfällen exakte Meßwerte erzielen.

Die Weiterbildung von Anspruch 11 stellt auch in kritischen Betriebsbereichen sicher, daß stets nur der zum Abfragewechselstrom gehörige Wechselspannungsabfall erfaßt und ausgewertet wird. Dadurch ergibt sich eine völlige Trennung zwischen den gemischabhängigen und den innenwiderstandsabhängigen Spannungsanteilen.

Die Weiterbildung von Anspruch 12 führt zu einer besonders einfa chen und preiswerten, kompakten Einrichtung.

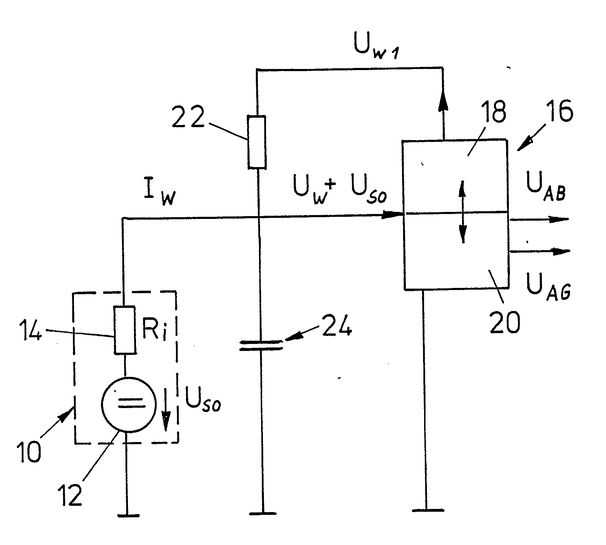

Die Erfindung wird nachfolgend an einem in einer einzigen Figur dargestellten Ausführungsbeispiel näher erläutert.

Eine Lambda-Meßsonde 10 ist in der Zeichnung schematisch mit einem Innenwiderstand $R_i$ bzw. 14 und einer Eigenspannungsquelle 12 dargestellt. Der Innenwiderstand fällt mit der Sondentemperatur stark ab, und die Meßsonde ist erst etwa ab einer Betriebstemperatur von 200 bis 300 °C betriebsbereit. Bei Überschreitung dieser Temperatur unterschreitet der Innenwiderstand einen Widerstandswert von etwa 100 Kilo-Ohm. Die gemischabhängige Eigenspannung der Lambda-Meßsonde beträgt bei einem Lambda-Wert von 1 etwa 400 Milli-Volt und steigt zu kleineren bzw. größeren Lambda-Werten steil an bzw. ab. Bei sehr kleinen Lambda-Werten steigt die Eigenspannung bis auf etwa 800 Milli-Volt an.

Die Lambda-Meßsonde 10 ist an ein Zentralgerät 16 angeschlossen, das einen Wechselspannungsgenerator 18 und ein hiermit gekoppeltes Auswerteglied 20 umfaßt. Der Wechselspannungsgenerator 18 erzeugt eine impulsförmige Wechselspannung $u_{w1}$ die im vorliegenden Fall zwischen 0 Volt sowie 5 Volt variiert und ein Tastverhältnis von 1 : 1 hat. Diese Wechselspannung wird über einen hochohmigen Koppelwiderstand 22 an die Meßsonde angelegt, so daß ein näherungsweise konstanter Abfragewechselstrom $i_w$ in die Meßsonde 10 eingespeist wird.

Zur Störausfilterung ist bei üblichen Schaltungen die Meßsonde 10 von einem Kondensator 24 überbrückt. Dieser liegt somit in Reihe zu dem Koppelwiderstand 22, mit dem er bei extrem hochohmiger Meßsonde 10 einen Tiefpaß mit niedriger Grenzfrequenz bildet.

Im Normalbetriebszustand kann die Eigenspannung $U_{so}$ der Eigenspannungsquelle 12 gemessen werden, um den von der Meßsonde 10 erfaßten Gemischzustand festzustellen. Gleichzeitig durchfließt der Abfragewechselstrom $i_w$ den Innenwiderstand 14, an dem ein entsprechender Wechselspannungsabfall $u_w$ entsteht. Dieser gelangt zusammen mit der Eigenspannung $U_{so}$ zu dem Auswerteglied 20, das aus diesen Meßwerten zwei Meßergebnisse herleitet, nämlich einerseits eine den Gemischzustand repräsentierende Ausgangsspannung $U_{AG}$ und andererseits eine die Betriebsbereitschaft bzw. -temperatur repräsentierende Ausgangsspannung $U_{AB}$.

Die Frequenz des Abfragewechselstroms sollte groß gegenüber der Frequenz des Sonden- bzw. Eigensignals $U_{so}$ im Regelbetrieb sein. Außerdem sollte der infolge des Abfragewechselstroms am Innenwiderstand 14 entstehende Wechselspannungsabfall $u_w$ stets klein gegenüber der Eigenspannung $U_{so}$ sein.

Diese Maßnahmen führen zu einer einwandfreien Trennbarkeit bzw. Unabhängigkeit der gemischabhängigen und der temperatur- bzw. betriebsbereitschaftsabhängigen Signalaussagen.

Äußerst günstig ist es, wenn nur derjenige Anteil des Wechselspannungsabfalls $u_w$ im Auswerteglied 20 erfaßt wird, das heißt ausgefiltert wird, der nach Frequenz und Phasenlage dem Abfragewechselstrom bzw. der diesen erzeugenden Ausgangsspannung des Wechselspannungsgenerators 18 entspricht. Dies erfolgt im Betrieb dadurch, daß das Auswerteglied 20 und der Wechselspannungsgenerator 18 funktionsmäßig kooperieren und im einfachsten Fall gerätetechnisch zusammengefaßt sind.

Da der Koppelwiderstand 22 und der Kondensator 24 bei extremer Hochohmigkeit der Meßsonde 10 einen Tiefpaß mit niedriger Grenzfrequenz bilden, wird der dann am Kondensator 24 anstehende Wechselspannungsanteil sehr klein. In diesem Grenzfall kann jedoch der Gleichspannungsabfall an dem Innenwiderstand 14 infolge des Gleichstromanteils des impulsförmigen Abfragewechselstroms ausgewertet werden. Sobald der Gleichspannungsabfall über eine bestimmte Schwelle steigt, liegt eine Außerbetriebsbereitschaft der Meßsonde vor.

Die Kooperation zwischen dem Wechselspannungsgenerator 18 und dem Auswerteglied 20 beinhaltet einerseits, daß das Auswerteglied 20 den Wechselspannungsabfall $u_w$ nur in dem Maße auswertet, wie es der Frequenz und der Phasenlage der Ausgangsspannung des Wechselspannungsgenerators 18 entspricht. Außerdem wird im Auswerteglied 20 die jeweilige Größe der Wechselspannung bzw. des Abfragewechselstroms $i_w$ berücksichtigt. Ferner ist es möglich, daß das Auswerteglied 20 die Größe der Ausgangsspannung des Wechselspannungsgenerators 18 in Abhängigkeit von der Größe des Wechselspannungsanteils an der Meßsonde 10 steuert, um entweder eine Mindestsignalgröße zu erzielen oder aber einen konstanten Spannungsabfall zu bewirken und dann aus der Größe der Ausgangsspannung des Wechselspannungsgenerators 18 bzw. des Abfragewechselstroms $i_w$ auf die Größe des Innenwiderstands 14 bzw. die Betriebsbereitschaft der Meßsonde 10 zu schließen.

## Ansprüche

1. Verfahren zum Feststellen der Betriebsbereitschaft einer Lambda-Meßsonde über deren elektrischen Innenwiderstand durch externe elektrische Beaufschlagung und durch Auswerten der dabei an der Meßsonde abfallenden Spannung, **dadurch gekennzeichnet,** daß in die Meßsonde ständig oder wiederholt ein näherungsweise konstanter Abfragewechselstrom eingespeist wird und daß der durch diesen am Innenwiderstand begründete Wechselspannungsabfall ausgefiltert sowie zu einem den Innenwiderstand repräsentierenden Meßwert ausgewertet wird.

2. Verfahren nach Anspruch 1, dadurch gekennzeichnet, daß die Frequenz des Abfragewechselstroms groß gegenüber derjenigen bzw. gegenüber den zeitlichen Veränderungen des Sonden- oder Eigensignals der im Regelbetrieb befindlichen Meßsonde gewählt wird.

3. Verfahren nach Anspruch 1 oder 2, dadurch gekennzeichnet, daß die Größe oder Amplitude des Abfragewechselstroms so gewählt wird, daß der hierdurch bedingte Wechselspannungsabfall am Innenwiderstand stets klein gegenüber dem Sonden- bzw. Eigensignal der Meßsonde bleibt.

4. Verfahren nach einem der Ansprüche 1 bis 3, dadurch gekennzeichnet, daß ein rechteckförmiger Abfragewechselstrom eingespeist wird.

5. Verfahren nach Anspruch 4, dadurch gekennzeichnet, daß das Tastverhältnis des Abfragewechselstroms 1 : 1 beträgt.

6. Verfahren nach Anspruch 4 oder 5, dadurch gekennzeichnet, daß der Abfragewechselstrom einen Gleichstromanteil aufweist, dessen hierdurch am Innenwiderstand begründeter Gleichspannungsabfall bei extrem hochohmiger Meßsonde bzw. kapazitiv bedingter Unterdrückung des Wechselspannungsanteils ersatzweise erfaßt und ausgewertet wird.

7. Verfahren nach einem der Ansprüche 1 bis 6, dadurch gekennzeichnet, daß der durch den Abfragewechselstrom begründete Wechselspannungsabfall an der Meßsonde durch Berücksichtigung von Frequenz und Phasenlage ausgefiltert bzw. ausgewertet wird.

8. Einrichtung zum Durchführen des Verfahrens nach einem oder mehreren der Ansprüche 1 bis 7, gekennzeichnet durch einen Wechselspannungsgenerator (18), der über einen gegenüber dem Innenwiderstand ($R_i$) der Meßsonde (10) hochohmigen Widerstand (22) an die Meßsonde angekoppelt ist.

9. Einrichtung nach Anspruch 8, dadurch gekennzeichnet, daß der Wechselspannungsgenerator (18) als Impulsgenerator ausgebildet ist.

10. Einrichtung nach Anspruch 9, gekennzeichnet durch einen Wechselspannungsgenerator (18) mit Ausgangsimpulsen zwischen 0 Volt sowie etwa 5 Volt und einem Impulstastverhältnis von etwa 1 : 1.

11. Einrichtung nach einem der Ansprüche 8 bis 10, gekennzeichnet durch ein den Wechselspannungsabfall an der Meßsonde (10) er fassendes und in Abhängigkeit von der Größe und Frequenz sowie Phasenlage des Wechselspannungsgenerators (18) ausfilterndes bzw. auswertendes Auswerteglied (20).

12. Einrichtung nach Anspruch 11, dadurch gekennzeichnet, daß der Wechselspannungsgenerator (18) und das Auswerteglied (20) gerätetechnisch zusammengefaßt sind.

## EINSCHLÄGIGE DOKUMENTE

EP 89108704.1

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | <u>DE - A1 - 3 117 790</u><br>(ROBERT BOSCH)<br> * Gesamt *<br>-- | 1-3,6-<br>8,11 | G 01 N 27/50<br>G 01 N 27/58 |
| A | <u>DE - A1 - 3 628 707</u><br>(VDO)<br> * Zusammenfassung *<br>-- | 1 | |
| A | <u>DE - A1 - 3 637 029</u><br>(VDO)<br> * Zusammenfassung *<br>---- | 1 | |

RECHERCHIERTE
SACHGEBIETE (Int. Cl.4)

G 01 N

Der vorliegende Recherchenbericht wurde für alle Patentansprüche erstellt.

| Recherchenort | Abschlußdatum der Recherche | Prüfer |
|---|---|---|
| WIEN | 01-08-1989 | NARDAI |